# EUROPEAN PATENT SPECIFICATION

(11) **EP 1 034 138 B1**
(45) Date of publication and mention of the grant of the patent: **28.04.2004**
(21) Application number: 98946695.8
(22) Date of filing: 28.09.1998
(51) Int. Cl.: C02F 1/44, B01D 61/12, B01D 61/08

(54) **APPARATUS AND METHOD FOR THE PURIFICATION OF WATER**
VORRICHTUNG UND VERFAHREN ZUR WASSERREINIGUNG
APPAREIL ET PROCEDE D'EPURATION D'EAU POTABLE

(30) Priority: 05.10.1997 IL 12188397
(43) Date of publication of application: 13.09.2000
(73) Proprietor: HomeFlow Technologies SA, 6300 Zug (CH)
(72) Inventor: WISEBURGH, Peter, 93108 Jerusalem (IL); TANNY, Gerald, 76310 Rehovot (IL); HULLEY, Peter, Isle of Man IM9 5PB (GB)
(74) Representative: Michelotti, Giuliano
(86) International application number: PCT/IL1998/000469
(87) International publication number: WO 1999/018033

(56) References cited:
- EP-A- 0 438 372
- EP-A- 0 539 069
- US-A- 4 623 467
- US-A- 4 784 763
- US-A- 4 801 375
- US-A- 4 983 288
- US-A- 5 045 197

## Description

### Field of the Invention

This invention relates to an apparatus for purifying water, that is or may be infected by microorganisms, and rendering it potable, and to a method of operating said.

### Background of the Invention

In many localities, no safe and reliable water supply is available. A water distribution system may be lacking, or, frequently, such a system may exist but deliver water that is not or may not be safe and fit for drinking because it is contaminated, particularly by microorganisms. The problem of providing safe, potable water in such localities, has received wide attention and found a variety of solutions in the art.

Filtration is one of the means that can be used. In most cases, the filters used in water purification apparatus operate at constant pressure mode, viz. a filter is placed on a source of constant pressure and allowed to filter water until its rate of filtration is below some predetermined unacceptable value. In some cases, some degree of flow rate control is provided. For instance, USP 5,503,735 discloses a liquid purification system which provides a reverse osmosis filter membrane in a filter cartridge. Not all of the water passes through the membrane and the water not passing through the membrane passes through a pressure relief valve which can be adjusted to vary the water pressure and flow rates in the system. Devices which maintain a constant flow rate and variable pressures are employed in the systems in which water flows, for instance, in irrigation systems. Processes for controlling the flow-through speed of the filter infiltration devices are also known. One such device is described in USP 5,238,559.

JP 05185070 (Kokai No. 5-185070) notes that in domestic water purifiers the filter module must be replaced when the water that has flown through it has exceeded the allowable absorption capacity of the absorbent inside the module, and that water purifiers are known which are provided with a life meter capable of displaying the time of replacing the filter module. However, the known devices are said to be unreliable because they measure only the time of the water flow and this does not provide a reliable indication due to fluctuations in the water flow rate. Therefore said application proposes a domestic water purifier which comprises a constant flow rate valve, a sensor for detecting start and stop of water flow and generating corresponding signals, and means for measuring an integrated operating time based on said signals and displaying a signal when said integrated time reaches a preset value. The application shows various structures of constant flow rate valves, but as to the filter module it shows no structure and states that the invention may utilize various structures of the prior art.

"EP-A- 0 438 372 discloses a reverse osmosis system comprising a combination of a sediment filter, a reverse osmosis filter and an impurity filter with provisions for operating a faucet at constant flow rate, but without any provision for operating the reverse osmosis system at constant flow rate.

US-A- 4,801,375 provides a water vending machine in which a semi-permeable membrane separates feed water into (i) a permeate containing a reduced amount of solids and dissolved substances (mainly sodium chloride), and (ii) a concentrate, to be drained, containing enriched amounts of solids and dissolved substances. However, this document does not intend to provide a domestic apparatus for delivering water that is free from microorganism pollution.

US-A- 5,045,197 just discloses a mechanical structure of a reverse osmosis water purification system, having fairly conventional operation. No means are disclosed to operate the system at constant flow rate."

The water purification systems of the prior art, particularly those intended not merely to remove solid substances, but to remove microorganisms and render the water fully potable, are not fully satisfactory from several viewpoints. Their throughput is usually low, so that the filters must be changed frequently, must have a large surface area and. are very expensive.

It is a purpose of this invention to provide an apparatus for drinking purifying water, and which is free of the defects of the existing devices.

It is another purpose of this invention to provide a method for purifying water, which is free of the defects of prior art methods.

It is a further purpose of this invention to provide a method for optimizing the operation of an apparatus for the purification of drinking water, by choosing a combination of flow rate and surface area.

Other purposes and advantages of the invention will appear as the description proceeds.

### Summary of the Invention

The invention provides an apparatus for purifying water, comprising a feed water inlet and a purified water outlet, a filter having depth filter layers and microporous filter membrane layers interposed between said inlet and said outlet, means for driving the water through the filter at a constant flow rate, means for monitoring the time from the installation of the filter, means for monitoring the aggregate time during which the water has flowed through the filter, and means for preventing the flow of water through the filter when either of said times has reached a predetermined threshold value. The means for driving the water through the filter at a constant flow rate may comprise means for applying pressure to the filter and means for controlling the flow rate regardless of changes in the pressure drop across the filter layers, such as a flow restrictor of a known type.

In a preferred embodiment of the apparatus, the depth filter means and microporous membrane means are structured and assembled as will be described hereinafter to constitute a filter device, but said filter device is not, per se, a part of the invention and is not claimed herein per se, but is the subject matter of copending application No. 121884 in the name of Osmotek Ltd.; and the apparatus of the invention could be provided with filters of different structure, provided that they comprise depth filter and microporous membrane filter means which the water successively flows through to be purified.

The filter device of the preferred embodiment is composed of a number of component filter elements, although each filter element by itself would be capable of a filtering action. Such a filter element comprises:
a) - an innermost drainage layer, preferably a substantially open, plastic netting;
b) - two layers of microporous membrane, preferably supported each on a support fabric layer disposed between it and said drainage layer; and more preferably, having a retentivity greater than 95% for microorganisms, said two layers being symmetrically disposed adjacent to the two sides of said drainage layer;
c) - two layers of a depth filter or prefilter (these two terms being used as synonyms in this specification), preferably a glass fiber filter, symmetrically disposed adjacent to the two outer sides of said microporous membrane layers;
d) - said microporous membrane layers and said depth filter layers being sealed together along a top edge, preferably extending above the top of said drainage layer and of said support fabric layers, if present;
e) - said drainage layer and said microporous membrane layers, as well as said support fabric layers, if present, extending at their bottom below the bottom of said depth filter layers, said microporous membrane layers being sealed to said depth filter layers at the bottom of these latter; and
f) - said microporous membrane layers and said depth filter layers being wider than said drainage layer, and said support fabric layers, if any, and being sealed together along their lateral edges.

The terms "top" and "bottom" refer to the position which the filter element will have in the complete filter device.

Said filter device comprises a base plate having a central opening and an upper surface, and a plurality of elements as hereinbefore defined, arranged parallel to one another and perpendicular to said base plate, and traversing said central opening thereof with the bottom of their depth filter layers at the level of said base plate upper surface, said filter elements being potted to said base plate by filling with adhesive the space between them and the inner edge of said base plate's central opening. The said filter further comprises a sealed housing, in which the base plate with the filter elements potted thereto is enclosed in a tight manner.

In a variant of said filter, the microporous membrane layers and the depth filter or prefilter layers of the aforesaid filter element are sealed together by means of adhesive.

In another variant of said filter, the depth filter layers are laminates, each comprising a layer of porous thermoplastic fabric, and the microporous membrane layers and their support layers are thermoplastic. If the melting temperature of the microporous membrane layer is at least 50°C higher than those of at least one of the remaining thermoplastic layers, the layers can be sealed together by the application of pressure and heat as better explained hereinafter..

In a typical embodiment of the invention, the apparatus comprises:
a prefilter,
a membrane filter, which can be separate from the prefilter or combined with it in a single structural unit;
a pressure regulator;
a flow meter;
a timer;
a purified water outlet; and
valves and pressure gages, as they may be required.

The invention also provides a method of purifying drinking water which comprises causing the water to flow at a constant flow rate through an apparatus comprising a purification filter, which comprises depth filter or prefilter and microporous membrane filter means, monitoring the time from the installation of the filter, monitoring the aggregate time during which the water is flowing through the filter, and preventing the flow of water through the filter when either of those times has reached a predetermined threshold value. The means for driving the water through the apparatus at a constant flow rate may comprise means for feeding to water to be purified by applying pressure and means for controlling the flow rate, such as a flow restrictor of a known type. The depth filter means and microporous membrane means are preferably structured and assembled as in the filter element hereinbefore defined, so that the filter as a whole is the filter device hereinbefore defined, but the method of the invention could be carried out with apparatus comprising filters of different structure, provided that they comprise depth filter and microporous membrane filter means which the water successively flows through to be purified. The method of this invention is directed to the purification of drinking water, and the purification of water not for drinking purposes is disclaimed herein.

The expression "purifying drinking water", as used in this specification and claims, includes both rendering water, that is not fit for drinking, potable, and increasing the purity of water that is already drinking water, inasmuch as it is potable. Desirably, the purified water should be substantially sterile.

### Brief Description of the Drawings

In the drawings:
- Fig. 1 is a cross-sectional view of the filter element according to an embodiment of the invention;
- Fig. 2 is a front view of the same element;
- Fig. 3 is a perspective view of a filter device according to an embodiment of the invention, in an intermediate stage of its manufacture;
- Fig. 4 is a cross-sectional view of a filter device according to an embodiment of the invention, taken on a plane passing through the center lines of the filter elements;
- Fig. 5 is a cross-sectional view of the filter device of Fig. 4, taken on a plane parallel to the filter element and passing through the center line of the filter element;
- Fig. 6 is a cross-sectional view similar to Fig. 1, of a filter element according to a different embodiment of the invention;
- Fig. 7 is a diagram in which Total Throughput to reach a Pressure Drop of 2.533 bar (2.5 atm), in thousands of liters, is plotted versus Fluid Velocity in cm/min; and
- Fig. 8 is a schematic, block diagram illustration of an apparatus according to an embodiment of the invention.

### Detailed Description of Preferred Embodiments

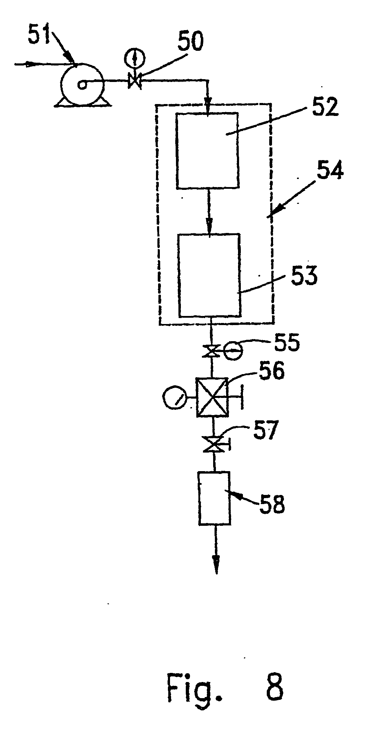

As shown in Fig. 8, an apparatus according to the invention comprises an inlet 50, preferably including a pressure gauge and a pressure regulator, of any known type. The pressure for driving the water through the apparatus may be provided by the source of water itself, as by a tap or water main, or, if this is lacking or insufficient, by a pump 51 of any suitable kind. 52 and 53 indicate, respectively, a prefilter and a membrane filter, which can be integrated in a single filter device 54, as indicated by the broken lines of Fig. 8. The filter is preferably followed by an outlet pressure gauge 55 and by a constant pressure regulator 56. A needle valve 57 may be provided after said regulator. From it, the water flows though a unit 58, which is preferably an integrated component comprising a flow meter, a timer, and a shut-off valve, and reaches the outlet.

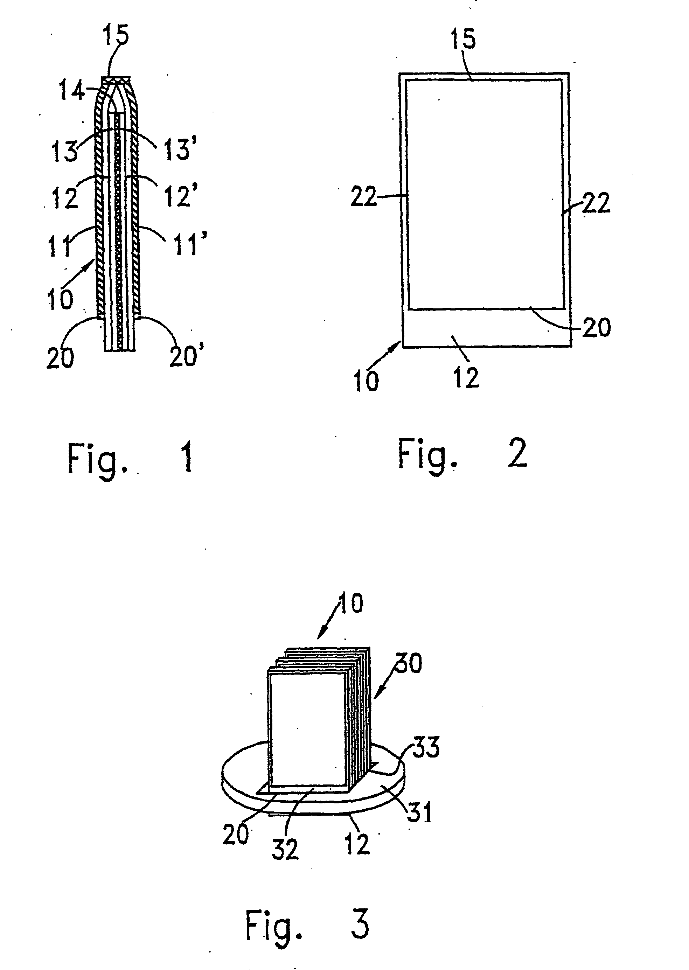

Figs. 1 to 5. illustrate a filter device used in a preferred embodiment of the apparatus of the invention. As stated hereinbefore, said filter device, per se, is not a part of this invention and is the subject matter of another copending application.

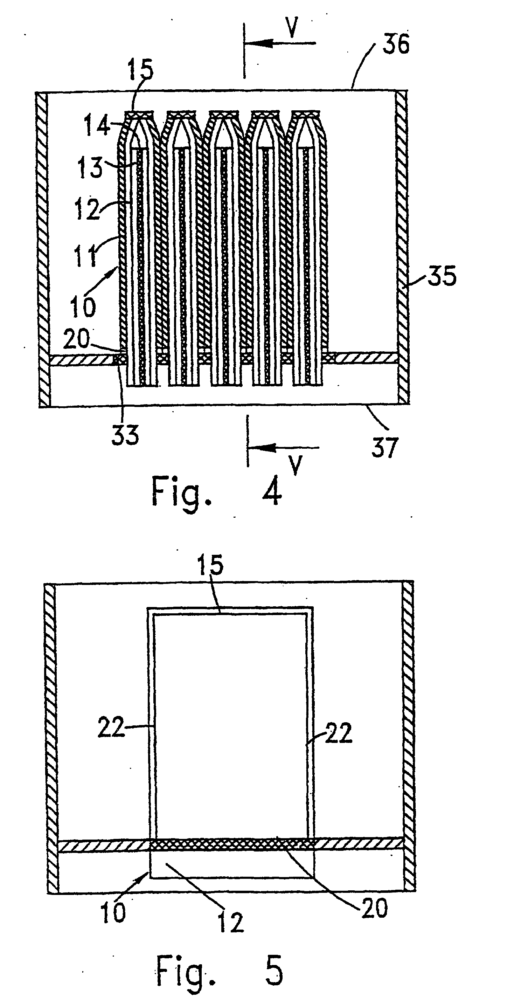

In said figures, a filter element 10 comprises two outer layers of depth filter or prefilter 11 and 11', which are preferably made of glass fiber. Internally, of layers 11 and 11', the filter element comprises layers 12 and 12' of microporous membrane, preferably having a retentivity greater than 95% for microorganisms, which are supported respectively on support fabrics 13 and 13'. All the aforesaid layers are arranged symmetrically about a substantially open plastic netting 14, which constitutes a drainage layer to conduct away the fluid passing through the aforesaid layers 11-11', 12-12', and 13-13'. Layers 11-11' and 12-12' are congruent and sealed together by means of adhesive, particularly a hot melt adhesive, or by welding. Depth filter layers 11-11' and the microporous membrane layers 12-12' are also sealed together at the edges 22. The drainage layer 14 and the fabric support layers 13-13' do not extend up to the top of the element, viz. to the seal 15, although, in an embodiment of the invention in which welding is used, the layers 13 and 13' may reach to the edge seal and be sealed thermoplastically together. In Figs. 1 and 2, both prefilter layers 11-11' do not reach to the bottom of the element, but the microporous membrane layers, support fabric layers and drainage layers protrude beyond them towards the bottom. The depth filter layers 11-11' are sealed at 20-20' to the microporous membrane layers 12-12'. Support layers 13-13' and drainage layer 14 are narrower than the other layers and do not take part in seals 22.

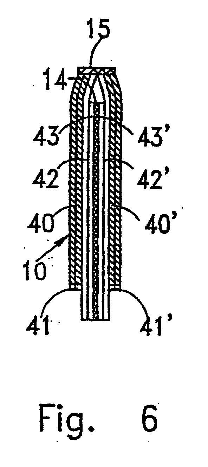

A number of filter elements 10 are connected to provide a filter device, as illustrated in Figs. 4 and 5, Fig. 3 indicating an intermediate stage of the manufacture of the filter device. This latter, generally indicated at 30, comprises a base plate 31 having a central opening 32, the peripheral edge of which is indicated at 33. Filter elements 10 are passed through said central opening 32 and placed in such a way that their edges 20 are at the same level as the upper edge of base plate 31. In Fig. 3, central opening 32 is not filled with filter elements 10, but a space is left therein at the front of the device as seen in the drawing.

In Figs. 4 and 5, the filler is complete and the central opening 32 is filled with elements 10. The filter elements are in place, they are potted to the base plate by filling the empty space between them and the inner edge 33 of opening 32 with a suitable adhesive, so that no path of fluid flow exists between the elements 10 and the base plate 31. Base plate 31 is then mechanically sealed into an appropriate filter housing 35. The housing is open at the top, as indicated at 36, to provide an inlet for water to be filtered. The water passes through the various layers of each element 10, entering from outer depth layers 11-11' and exiting from drainage layer 14, and reaches an opening of housing 35, indicated at 37, which is the filtered water outlet.

In a variant of the filter element, illustrated in Fig. 6, the prefilter layers are replaced by laminates of glass fiber filter layer 40-40' and porous synthetic fabric layers 41-41' of melt temperature T₁, microporous membrane layers 42-42' are prepared from thermoplastic material having melt temperature T₂, and support layers 43-43' are also of porous synthetic fabric of melt temperature T₃ and are congruent with the preceding layers along edges 15 and 22 (these latter not shown in this figure, but in Fig. 2). Provided that T₂ is at least 50°C higher than T₁ or T₃, then the aforesaid seams 15 and 22 of the element can be created in a single step by welding under pressure with a hot die whose temperature is greater than either T₁ or T₃.

Drinking water is purified, according to the invention, by passing it through a filter element or a plurality of filter elements at a constant flow rate. With filters including a depth filter and a microporous membrane, it has been found that operation of the filter at constant flow rate is greatly advantageous with respect to operation at constant pressure, since a filter device operated constant flow rate requires a much smaller membrane surface area, even ten times smaller, to achieve the same overall throughput of a device operated at constant pressure. A filter device comprised in an apparatus according to an embodiment of the invention, having a filter area of 0.05 sq. meters, may produce 3,000 liters of filtered water at the constant flow rate of 2 liters/minute, when operating on tap water with an average filtration index value of 10, and need not be changed, before producing said volume of filtered water, more than once in three months.

When operating at constant pressure, the following phenomena occur in a filter comprising a prefilter and a microporous membrane. At the beginning of the process, the hydraulic resistance of the filter is lowest, the flow rate is at a maximum and the efficiency of the prefilter is lowest, since this is decreased as the velocity of the particles increases. As a consequence, particles pass through the prefilter and are captured on the surface of the microporous membrane, blocking pores and reducing the flow rate. As the filtration continues, the fluid velocity continues to decrease and as a result, the capture efficiency of the prefilter finally improves. The resistance of the prefilter and membrane increases until the combined resistance is such that the filter no longer provides a useful flow rate. When operating at constant flow rate, it is possible to choose a fluid velocity such that a maximum number of particles are captured by the prefilter from the beginning of the filtration process, so that the total throughout of the filter is greatly increased.

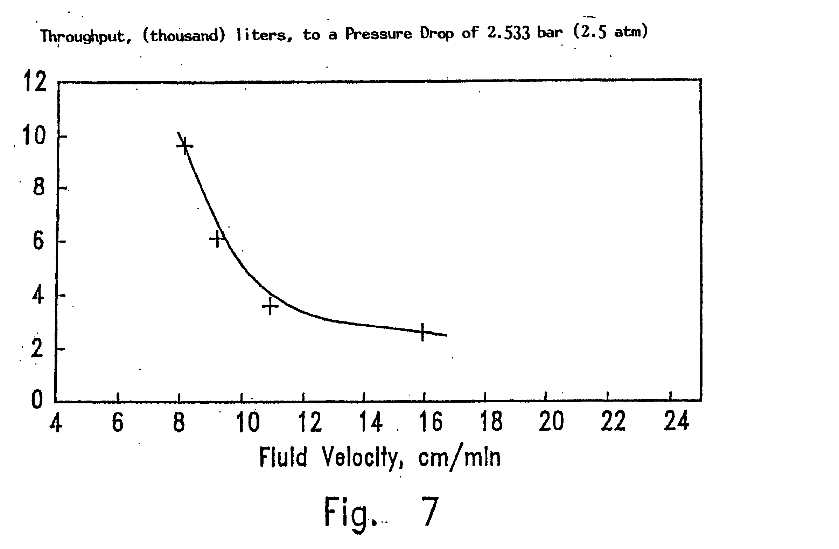

The general method of optimization of the operation of an apparatus according to the aforesaid preferred embodiment, viz. comprising a filter as hereinbefore particularly described, and more generally of a filter comprised of a depth filter and a microporous membrane filter, consists of the following steps:
1. A filter element operating at some initially convenient constant flow rate, is tested until a predetermined total pressure drop across the filter has been reached.
2. The results are plotted as in Fig. 7, in which Total Throughput is plotted versus Fluid Velocity (obtained by dividing the flow rate by the filter element surface area).
3. The testing is continued, either by changing the constant flow rate, or by changing the surface area of the elements, until the whole of Fig. 7 has been generated.
4. The desired total throughput is chosen, and a convenient combination of constant flow rate and surface area of membrane element is then chosen.
5. The filter is operated in a constant flow mode, in accordance with number 4 above.

Data for Total Throughput (to a pressure drop of 2.533 bar-2.5 atm) are shown in Fig. 7 for a flat sheet membrane filter element containing a glass fiber depth filter and a nominal 0,2 micron pore size microporous membrane. One can clearly see that when operated in constant flow, below a critical velocity, the Total Throughput of the membrane filter can be increased several fold.

The prefilter or depth filter layer 12 is preferably any prefilter material known in the art and could include, without being limited to fibrous or particulate, inorganic or organic material such as glass fiber, carbon, cellulose, polyolefins or other synthetic polymeric materials. The prefilter can also be in the form of a compressed, highly porous block of fibers, microfibers or particles, containing pores at least 5X the diameter of the pores in the membrane, or in the form of a woven or non-woven fabric, all of which are known in the art. A non-woven glass fiber material, containing no binding agents, with an approximate thickness of 450x10⁻⁶ mt and a nominal particle removal rating of 1 micron, is especially preferred for use in the filtration of tap water.

Microporous membrane layer 14 is preferably a microporous filter with pores between 0.05x10⁻⁶ mt and 0.45x10⁻⁶ mt (microns), and which is commonly fabricated from high temperature thermoplastics polymers, such as polysulphone, nylon, polyvinylidene fluoride, or inorganic materials, such as ceramic materials, or metals, and has a water permeability between 0.05-30 cc/sq. cm/sec/atm, as are commonly known in the art, as those described in chapters 2-4 of "Filtration in the pharmaceutical Industry", by Theodore H. Melzer, Marcel Dekker Inc. N.Y., Copyright 1987, ISBN 0-8247-7519-8.

Membrane support layers 13-13' are preferably woven or non-woven fabric of a synthetic material which does not swell or distort in water. Non-woven fabrics prepared from polyolefins are particularly useful for this purpose, as their range of melting temperature is well below that for many of the polymers used to fabricate membrane layer 14. Ideally this layer should have a maximal permeability, but anyway no less than ten times that of the membrane layer supported.

Plastic netting 14, for separating layers of filter material in order to create a fluid path, is available in a wide number of thermoplastic materials, prepared by extrusion or other processes, such as weaving continuous plastic filaments, and is well known in the art. Examples of such material are the polypropylene nets manufactures by Nalle Plastics, Austin, Texas, under the trademark Naltex.

The following example illustrates the performance of an apparatus according to the aforesaid preferred embodiment of the invention.

A membrane filter element with an effective filter surface area of approximately 24 sq. cm. was prepared from A/E glass fiber prefilter material (Gelman Sciences, Ann Arbor, Mi, USA), Super 200 microporous membrane (Gelman Sciences, Ann Arbor, Mi, USA), a polypropylene non-woven fabric as the membrane support layer and a polypropylene net (Nalle Plastics, Texas, USA) to create the drain path. Epoxy adhesive was used to create the glue seams. A number of such elements were potted with epoxy adhesive into a 4 mm thick plastic base plate to form a filter assembly, in order to create filter assemblies with effective filtration surface areas between 50 and 500 sq. cm. Hot melt adhesives, approved for direct contact with liquid food, are available on the market, e.g. from the Bostik, H.B. Fuller and Collano companies.

Each filter assembly was secured in an appropriate housing and its integrity was first integrity tested by the bubble point technique. After a short water flush, the entrance to the housing was connected to a source of gas pressure, and the exit tube conducting filtered water from the housing was placed in a vessel of water. The pressure of the gas was slowly raised until the first steady stream of bubbles was seen to issue from the housing exit tube. This pressure, 3.24 bar (3.2 atm), referred to as the - - bubble point, was found to be within 0,1013 bar (0.1 atm.) of that specified by the manufacturer for the Supor 200 membrane, thereby confirming that the housing and the filter assembly were integral, and that the membrane was of the designated nominal pore size.

A water purifying apparatus according to an embodiment of the invention and comprising said filter assembly, was tested at a constant flow rate of 2 liters per minute. Pressure gauges before and after the apparatus measured the pressure drop, and the test was concluded when the pressure drop exceeded 2.6 bar. An integrating water meter measured the cumulative throughput. The test data for such assemblies are shown in Fig. 7. The quality of the water was periodically monitored by the silt density or filtration index technique, and the index was found to vary between 8 and 15 during the day, with an average value of 10-12.

With reference to Fig. 7, a filter can be designed that uses a minimum amount of prefilter and membrane filter in order to achieve a predetermined goal of filter throughput and flow rate: e.g., a filter as herein described, which required to provide a total throughput of 10,000 liters at a maximum pressure drop of 2.533 bar (2.5 atm.) and flow rate of 2 liters/min.

As shown by Fig. 7, the maximum fluid velocity for said throughput should not exceed 8 cm/min. Since the required flow rate is 2000 cc/min, the required filter surface area (both the prefilter and the membrane filter) is the total flow rate divided by the velocity, or 250 sq.cm. Of course, it is possible to provide a greater area in order to insure the filter performance and account for possible variations in the quality of the water (which, in the case of the data of Fig. 7, was found to be quite constant).

As a specific embodiment of the invention, with reference to the schematic drawing of Fig. 8, a standard centrifugal pump with a capacity of 10-20 liters per minute at a pressure of up to 10.1325 bar (10 atm.) was attached to a 50 liter tank which was constantly refilled from a source of tap water. The pump outlet was followed by a standard 0-6 atmosphere water regulator equipped with gauge (Braukmann GbH, Ger.), and set to an inlet pressure of 4,053 bar (4 atmospheres). This was attached to a filter housing containing a filter element fabricated as described herein. A pressure gauge at the outlet was followed by a second regulator set at 0.5 atmosphere, the lowest setting at which it would effectively regulate. This was followed by an integrating water meter (Arad ltd., Israel) and a ball flow meter with an integral needle valve (Fisher Porter, USA). A separate electronic controller controlled a standard solenoid valve for the shutoff according to time.

While embodiments of the invention have been described for the purpose of illustration, it will be understood that the invention may be carried into practice by skilled persons with many modifications, variations and adaptations, without exceeding the scope of the claims.

## Claims

1. Apparatus for purifying drinking water, comprising a feed water inlet and a purified water dispensing outlet and a filter device (54) interposed between said inlet and said outlet; **characterized in that**:
a) the filter device (54) comprises a prefilter (52) and a microporous membrane filter (53); **in that**
b) the apparatus comprises constant flow rate means (58) for operating said filter at a constant flow rate;
(c) and **in that** the apparatus comprises means for monitoring the time from the installation of the filter device (54), means for monitoring the aggregate time during which the water has flowed through the filter device (54), and shutoff means adapted for preventing the flow of water through the filter device (54) when either of said times has reached a predetermined threshold value.

2. The apparatus according to claim 1, wherein the means for operating said filter device (54) at a constant flow rate comprise means for applying pressure to the filter device (54) and means (58) controlling the flow rate regardless of changes in pressure.

3. The apparatus according to claim 2, wherein the means (58) for controlling the flow rate comprises a flow restrictor (57).

4. Domestic apparatus for purifying drinking water according to claim 1, wherein the filter device (54) comprises at least a filter element (10) comprising:
(i) an innermost drainage layer (14);
(ii) two layers (12, 12') of microporous membrane, symmetrically disposed adjacent to two sides of said drainage layer (14);
(iii) two layers (11, 11') of a prefilter, symmetrically disposed adjacent to the two outer sides of said microporous membrane layers (12, 12');
(iv) said microporous membrane layers (12, 12') and said prefilter layers (11, 11') being integrally sealed along a top edge (15);
(v) said drainage layer (14) and said microporous membrane layers (12, 12') being sealed to said prefilter layers (11, 11') at the bottom (20, 20') of these layers; and
(vi) said microporous membrane layers (12, 12') and said depth filter layers (11, 11') being wider than said drainage layer (14), and being sealed together along their lateral edges (22);
and the filter (54) further comprises
a) one or more of such filter elements (10) arranged parallel to one another and perpendicular to a base plate (31) having a central opening (32) and an upper surface, and traversing said central opening (32) thereof with the bottom of their prefilter layers (11, 11') at the level of said base plate (31) upper surface;
b) said filter elements (10) being integrally adhered to the base plate (31) by filling with adhesive the space between them and an inner edge (33) of said base plate's (31) central opening (32);
c) said filter element (10) and base plate (31) being integrally sealed into a fluid pressurizable housing (35) such that the unfiltered water entering the housing is forced to pass through the filter elements (10) in order to exit from the housing (35) in a filtered state.

5. Method for purifying drinking water, **characterized by** causing the water to flow at a constant flow rate through a purification filter device (54) comprising prefilter means (52) and microporous membrane filter means (53) monitoring the time from the installation of the filter device (54), monitoring the aggregate time during which the water is flowing through the filter device (54); and preventing the flow of water through the filter device (54) when either of those times has reached a predetermined threshold value.

6. A method for choosing a combination of flow rate and surface area in an apparatus according to claim 1, which comprises the following steps:
I. operating a filter element (10) at an initial flow rate until a predetermined total pressure drop across the filter has been reached;
II. during the said operation, monitoring and plotting the total throughput versus the fluid velocity, obtained by dividing the flow rate by the filter element (10) surface area;
III. repeating the above operations at different fluid velocities, determined by changing the flow rate or the filter surface area, and plotting the throughput as a function of the fluid velocity;
IV. choosing the desired throughput, and reading from the aforesaid plotting, the corresponding fluid velocity;
V. choosing a combination of flow rate and surface areas of the filter element (10) area corresponding to the chosen throughput.

## Patentansprüche

1. Einrichtung zum Reinigen von Trinkwasser, die einen Speisewassereinlass und einen Abgabeauslass für gereinigtes Wasser aufweist, sowie eine Filtervorrichtung (54), die zwischen dem Einlass und dem Auslass angeordnet ist, **dadurch gekennzeichnet, dass**:
a) Die Filtervorrichtung (54) einen Vorfilter (52) und einen Filter (53) mit einer mikroporösen Membran aufweist;
b) die Einrichtung eine Konstantflussratenvorrichtung (58) zum Betreiben des Filters bei konstanter Flussrate aufweist;
c) und die Einrichtung eine Vorrichtung zur Überwachung der Zeit von der Anbringung der Filtervorrichtung (54) an aufweist, eine Vorrichtung zur Überwachung der Gesamtzeit, während derer das Wasser durch die Filtervorrichtung (54) geflossen ist, und eine Abschaltvorrichtung, die dazu ausgebildet ist, den Fluss von Wasser durch die Filtervorrichtung (54) zu verhindern, wenn eine dieser Zeiten einen vorbestimmten Schwellenwert erreicht hat.

2. Einrichtung nach Anspruch 1, bei welcher die Vorrichtung zum Betreiben der Filtervorrichtung (54) bei konstanter Flussrate eine Vorrichtung zum Anlegen von Druck an die Filtervorrichtung (54) und eine Vorrichtung (58) aufweist, welche die Flussrate unabhängig von Druckänderungen steuert.

3. Einrichtung nach Anspruch 2, bei welcher die Vorrichtung (58) zum Steuern der Flussrate einen Drosselkörper (57) aufweist.

4. Haushaltseinrichtung zum Reinigen von Trinkwasser nach Anspruch 1, bei welcher die Filtervorrichtung (54) zumindest ein Filterelement (10) aufweist, welches aufweist:
(i) eine innerste Auslassschicht (14);
(ii) zwei Schichten (12, 12') aus einer mikroporösen Membran, die symmetrisch in der Nähe von zwei Seiten der Auslassschicht (14) angeordnet sind;
(iii)zwei Schichten (11, 11') eines Vorfilters, die symmetrisch in der Nähe der beiden Außenseiten der Schichten (12, 12') aus einer mikroporösen Membran angeordnet sind;
(iv) wobei die Schichten (12, 12') aus mikroporöser Membran und die Vorfilterschichten (11, 11') einstückig entlang einem oberen Rand (15) angedichtet sind;
(v) die Auslassschicht (14) und die Schichten (12, 12') aus mikroporöser Membran abgedichtet an den Vorfilterschichten (11, 11') am Boden (20, 20') dieser Schichten angebracht sind; und
(vi) die Schichten (12, 12') aus mikroporöser Membran und die Vorfilterschichten (11, 11') breiter sind als die Auslassschicht (14), und abgedichtet entlang ihren Querrändern (22) miteinander verbunden sind;
und der Filter (54) aufweist
a) ein oder mehrere derartiger Filterelemente (10), die parallel zueinander und senkrecht zu einer Basisplatte (31) angeordnet sind, die eine zentrale Öffnung (32) und eine obere Oberfläche aufweist, und welche deren zentrale Öffnung (32) so überspannen, dass die Unterseite ihrer Vorfilterschichten (11, 11') sich auf dem Niveau der oberen Oberfläche der Basisplatte (31) befindet;
b) wobei die Filterelemente (10) vereinigt an der Basisplatte (31) dadurch befestigt sind, dass der Raum zwischen ihnen und einem Innenrand (33) der zentralen Öffnung (32) der Basisplatte (31) mit einem Kleber gefüllt ist;
c) und das Filterelement (10) und die Basisplatte (31) vereinigt in einem durch ein Fluid unter Druck setzbaren Gehäuse (35) abgedichtet sind, so dass das ungefilterte Wasser, das in das Gehäuse hineingelangt, dazu gezwungen wird, durch die Filterelemente (10) hindurchzugehen, um aus dem Gehäuse (35) im filtrierten Zustand herausgelangen zu können.

5. Verfahren zum Reinigen von Trinkwasser, **dadurch gekennzeichnet, dass** das Wasser dazu veranlasst wird, mit konstanter Flussrate durch eine Reinigungsfiltervorrichtung (54) zu fließen, die eine Vorfiltervorrichtung (52) und eine Filtervorrichtung (53) mit einer mikroporösen Membran aufweist, die Zeit von der Anbringung der Filtervorrichtung (54) überwacht wird, die Gesamtzeit überwacht wird, während derer das Wasser durch die Filtervorrichtung (54) fließt; und der Fluss von Wasser durch die Filtervorrichtung (54) verhindert wird, wenn eine dieser Zeiten einen vorbestimmten Schwellenwert erreicht hat.

6. Verfahren zur Auswahl einer Kombination einer Flussrate und einer Oberfläche in einer Einrichtung nach Anspruch 1, mit folgenden Schritten:
I. Betreiben eines Filterelements (10) bei einer ursprünglichen Flussrate, bis ein vorbestimmter Gesamtdruckabfall über den Filter erreicht wird;
II. während dieses Betriebs, Überwachen und Auftragen des Gesamtdurchsatzes in Abhängigkeit von der Fluidgeschwindigkeit, erhalten durch Dividieren der Flussrate durch die Oberfläche des Filterelements (10);
III. Wiederholung der voranstehenden Operationen bei unterschiedlichen Fluidgeschwindigkeiten, bestimmt durch Änderung der Flussrate oder der Filteroberfläche, und Auftragen des Durchsatzes in Abhängigkeit von der Fluidgeschwindigkeit;
IV. Auswählen des gewünschten Durchsatzes, und Ablesen aus der voranstehend geschilderten Auftragung der entsprechenden Fluidgeschindigkeit;
V. Auswahl einer Kombination aus Flussrate und Oberflächen der Oberfläche des Filterelements (10) entsprechend dem ausgewählten Durchsatz.

## Revendications

1. Appareil pour épurer l'eau potable, comprenant une entrée d'alimentation en eau et une sortie libérant l'eau épurée et un dispositif de filtrage (54) intercalé entre ladite entrée et ladite sortie, **caractérisé en ce que** :
a) le dispositif de filtrage (54) comprend un pré-filtre (52) et un filtre à membrane microporeuse (53) ; **en ce que**
b) l'appareil comprend un moyen de vitesse d'écoulement constante (58) pour faire fonctionner ledit filtre à un écoulement constant ;
c) et **en ce que** l'appareil comprend un moyen pour contrôler le temps entre l'installation du dispositif de filtrage (54), un moyen pour contrôler le temps total pendant lequel l'eau s'est écoulée à travers le dispositif de filtrage (54), et un moyen de fermeture adapté pour empêcher l'écoulement de l'eau à travers le dispositif de filtrage (54) lorsque l'un quelconque de ces temps a atteint une valeur seuil prédéterminée.

2. Appareil selon la revendication 1, dans lequel les moyens pour faire fonctionner ledit dispositif de filtrage (54) à une vitesse d'écoulement constante comprennent un moyen pour appliquer une pression au dispositif de filtrage (54) et un moyen (58) commandant la vitesse d'écoulement quels que soient les changements de pression.

3. Appareil selon la revendication 2, dans lequel le moyen (58) pour commander la vitesse d'écoulement comprend un réducteur d'écoulement (57).

4. Appareil électroménager pour l'épuration de l'eau potable selon la revendication 1, dans lequel le dispositif de filtrage (54) comprend au moins un élément de filtrage (10) comprenant :
i. une couche de vidange la plus intérieure (14) ;
ii. deux couches (12, 12') de membrane microporeuse, agencées symétriquement à côté de deux côtés de ladite couche de vidange (14) ;
iii. deux couches (11, 11') d'un préfiltre, agencées symétriquement à côté des deux côtés extérieurs desdites couches de membrane microporeuse (12, 12') ;
iv. lesdites couches de membrane microporeuse (12, 12') et lesdites couches du préfiltre (11, 11') étant scellées intégralement le long d'un bord supérieur (15) ;
v. ladite couche de vidange (14) et lesdites couches de membrane microporeuse (12, 12') étant scellées auxdites couches du préfiltre (11, 11') au bas (20, 20') de ces couches ; et
vi. lesdites couches de membrane microporeuse (12, 12') et lesdites couches de filtrage de profondeur (11, 11') étant plus larges que ladite couche de vidange (14), et étant scellées ensemble le long de leurs bords latéraux (22) ;
et le filtre (54) comprend en outre
a) un ou plusieurs de ces éléments de filtrage (10) agencés parallèlement les uns aux autres et perpendiculaires à une plaque de base (31) ayant une ouverture centrale (32) et une surface supérieure, et traversant ladite ouverture centrale (32) de celle-ci avec le bas de leurs couches de préfiltre (11, 11') au niveau de ladite surface supérieure de la plaque de base (31) ;
b) lesdits éléments de filtrage (10) étant intégralement collés à la plaque de base (31) en remplissant avec un adhésif l'espace entre eux et un bord intérieur (33) de l'ouverture centrale (32) de ladite plaque de base (31) ;
c) ledit élément de filtrage (10) et ladite plaque de base (31) étant scellés intégralement dans un logement hydraulique (35) de telle façon que l'eau non filtrée entrant dans le logement soit forcée de passer à travers les éléments de filtrage (10) afin de sortir du logement (35) dans un état filtré.

5. Procédé d'épuration de l'eau potable, **caractérisé par le fait qu'**il entraîne l'écoulement de l'eau à une vitesse d'écoulement constante à travers un dispositif de filtrage d'épuration (54) comprenant un moyen de préfiltrage (52) et un moyen de filtrage à membrane microporeuse (53) contrôlant le temps à partir de l'installation du dispositif de filtrage (54), contrôlant le temps total pendant lequel l'eau s'écoule à travers le dispositif de filtrage (54) ; et empêchant l'écoulement d'eau à travers le dispositif de filtrage (54) lorsque l'un quelconque des deux temps a atteint une valeur seuil prédéterminée.

6. Procédé pour choisir une combinaison de vitesse d'écoulement et de zone de surface dans un appareil selon la revendication 1, qui comprend les étapes suivantes :
I- faire fonctionner un élément de filtrage (10) à une vitesse d'écoulement initiale jusqu'à ce qu'une chute de pression totale prédéterminée à travers le filtre ait été atteinte ;
II. pendant ledit fonctionnement, contrôler et relever le débit total par rapport à la vitesse du fluide, obtenu en divisant la vitesse d'écoulement par la zone de surface de l'élément de filtrage (10) ;
III. répéter les opérations ci-dessus à différentes vitesses de fluide, déterminées en changeant la vitesse d'écoulement ou la zone de surface de filtrage, et relever le débit en fonction de la vitesse du fluide ;
IV. choisir le débit souhaité, et lire, à partir du relevé susmentionné, la vitesse de fluide correspondante ;
V. choisir une combinaison de vitesse d'écoulement et de zone de surface de la zone de l'élément de filtrage (10) correspondant au débit choisi.
